# EUROPEAN PATENT APPLICATION

(11) **EP 3 492 902 A1**
(43) Date of publication of application: **05.06.2019**
(21) Application number: 18209937.4
(22) Date of filing: 03.12.2018
(51) Int. Cl.: G01N 1/38, G01N 35/02, G01N 35/10, G01N 35/00

(54) **APPARATUS HAVING FUNCTION OF DILUTING SAMPLE AND METHOD FOR DILUTING SAMPLE**

(30) Priority: 04.12.2017 JP 2017232564
(71) Applicant: Shimadzu Corporation, Kyoto 604-8511 (JP)
(72) Inventor: NISHIO, Tatsuya, Kyoto-shi,, Kyoto 6048511 (JP)
(74) Representative: Mewburn Ellis LLP

(57) **Abstract**

Contamination is prevented, and a sample and a diluent are more easily mixed together while the accuracy of the sample amount is maintained. An apparatus includes a sample preparation container preparing the sample, a diluent part storing the diluent for diluting the sample, and a control unit controlling operation of a sampling needle. The control unit includes a dilution operation part configured to add the diluent collected from the diluent part to the sample collected from a sample part with the sampling needle to dilute the sample in the container. The dilution operation part dispenses, with the sampling needle, the diluent into the container before dispensing of the sample, dispenses, with the sampling needle, the sample into the container into which the diluent has been dispensed, and thereafter dispenses, into the container, the diluent sucked with the sampling needle before suction of the sample.

## Description

### FIELD

The present disclosure relates to an apparatus, such as an autosampler for liquid chromatography, having the function of diluting a sample and a method for diluting a sample.

### BACKGROUND

An analysis system that has been suggested and implemented automatically performs pretreatment, such as a process for removing specific components unnecessary for analysis from a biological sample to extract required components as a sample and a drying and solidifying process for concentrating, and drying and solidifying, the extracted sample, and analysis such as liquid chromatographic analysis for the pretreated sample (see WO 2014/072979 A1).

In such an analysis system, a sample that undergoes predetermined pretreatment with a pretreatment apparatus is transferred to an autosampler of an analyzer. The autosampler collects the pretreated sample using a sampling needle, and injects the collected sample into a channel for analysis. In the autosampler of the analyzer, the sample transferred from the pretreatment apparatus may be prepared by being diluted with a diluent.

The sample is diluted in a sample preparation container inside the autosampler in the following manner. Specifically, a necessary amount of the sample transferred from the pretreatment apparatus and a necessary amount of the diluent are measured and collected using a syringe pump connected to the sampling needle. Then, the sample and the diluent are dispensed into the sample preparation container and then stirred.

If, to dilute the sample, the sampling needle is used to collect the sample and then to collect the diluent, the sample unfortunately enters a container storing the diluent, resulting in contamination of the diluent. In addition, the sample remains in the sampling needle, thus causing contamination and impairing the accuracy of the sample amount.

For these reasons, the diluent is preferably sucked into the sampling needle before the sample is sucked thereinto, and the diluent and the sample are preferably dispensed together into the sample preparation container. Sucking the diluent before the suction of the sample prevents the inside of the container for the diluent from being contaminated with the sample, and allows the sample in the sampling needle to be washed away with the diluent, thus preventing the sample from remaining in the sampling needle.

However, when the diluent is sucked into the sampling needle before the sample is sucked thereinto, and the diluent and the sample are dispensed together into the sample preparation container, the sample is dispensed into the sample preparation container before the diluent is dispensed thereinto. This results in formation of a phase of the sample at the bottom of the sample preparation container. The sample has a higher specific gravity than the diluent does, and thus the sample accumulates at the bottom of the sample preparation container. In such a state, even if the sample is repeatedly sucked into, and discharged from, the sampling needle in the sample preparation container, the sample remains accumulated at the bottom of the sample preparation container. This prevents the sample and the diluent from being properly mixed together.

In view of the foregoing background, it is therefore an object of the present disclosure to facilitate mixing the sample and the diluent together while preventing contamination and maintaining the accuracy of the sample amount.

### SUMMARY

An apparatus according to the present disclosure includes: a sample part including a sample; a movable sampling needle configured to suck and discharge liquid through a tip end of the movable sampling needle; a sample preparation container configured to prepare the sample collected from the sample part with the sampling needle; a diluent part configured to store a diluent for diluting the sample; and a control unit configured to control operation of the sampling needle, the control unit including a dilution operation part configured to add the diluent collected from the diluent part to the sample collected from the sample part with the sampling needle to dilute the sample in the sample preparation container. The dilution operation part dispenses the diluent into the sample preparation container with the sampling needle before dispensing of the sample, dispenses, with the sampling needle, the sample into the sample preparation container into which the diluent has been dispensed, and thereafter dispenses, into the sample preparation container, the diluent sucked with the sampling needle before suction of the sample.

Specifically, in the apparatus according to the present disclosure, when the sample is diluted, the diluent is dispensed into the sample preparation container before dispensing of the sample, and thereafter the sample and the diluent are dispensed in this order. The diluent dispensed into the sample preparation container after dispensing of the sample is sucked with the sampling needle before suction of the sample. Dispensing the diluent prevents the sample from remaining in the sampling needle or a channel, and allows the sample amount to be accurate. Since the diluent is dispensed into the sample preparation container before dispensing of the sample, the sample is not accumulated at the bottom of the sample preparation container from immediately after dispensing of the sample. Consequently, the sample and the diluent are easily mixed together.

In the apparatus of the present disclosure, the dilution operation part may dispense, into the sample preparation container, the diluent sucked with the sampling needle before the suction of the sample, and may thereafter suck, and discharge, liquid in the sample preparation container with the sampling needle once or more times, thereby stirring the sample and the diluent.

The sample dilution method according to the present disclosure is a method for diluting a sample by adding a diluent to the sample using a sampling needle in a sample preparation container. The method includes: dispensing the diluent into the sample preparation container with the sampling needle before dispensing of the sample; dispensing, with the sampling needle, the sample into the sample preparation container into which the diluent has been dispensed; and thereafter dispensing, into the sample preparation container, the diluent sucked with the sampling needle before suction of the sample.

Specifically, in the method according to the present disclosure, the diluent is dispensed into the sample preparation container before dispensing of the sample, the sample is then dispensed, and further thereafter the diluent sucked with the sampling needle before suction of the sample is dispensed. Dispensing the diluent after dispensing of the sample prevents the sample from remaining in the sampling needle or a channel, and allows the sample amount to be accurate. Since the diluent is dispensed into the sample preparation container before dispensing of the sample, the sample is not accumulated at the bottom of the sample preparation container from immediately after the sample is dispensed. Consequently, the sample and the diluent are easily mixed together.

In the method of the present disclosure, the diluent sucked with the sampling needle before the suction of the sample may be dispensed into the sample preparation container, and thereafter liquid in the sample preparation container may be sucked and discharged with the sampling needle once or more times, thereby stirring the sample and the diluent.

The apparatus of the present disclosure is configured to dispense the sample into the sample preparation container after dispensing of the diluent and thereafter to dispense the diluent sucked with the sampling needle before the suction of the sample. This prevents contamination, and allows the sample amount to be accurate, while the sample and the diluent are easily mixed together.

According to the method of the present disclosure, the sample is dispensed into the sample preparation container after dispensing of the diluent, and thereafter the diluent sucked with the sampling needle before the suction of the sample is dispensed. This prevents contamination, and allows the sample amount to be accurate, while the sample and the diluent are easily mixed together.

### BRIEF DESCRIPTION OF THE DRAWINGS

FIG. 1 is a block diagram schematically showing one example of the configuration of an analysis system.
FIG. 2 is a plan view illustrating one example of the configuration of a pretreatment apparatus.
FIG. 3 is a plan view showing one embodiment of an LC system.
FIGS. 4A is conceptual views for illustrating a dilution operation according to the embodiment step by step.
FIGS. 4B is conceptual views for illustrating a dilution operation according to the embodiment step by step.
FIGS. 4C is conceptual views for illustrating a dilution operation according to the embodiment step by step.
FIGS. 4D is conceptual views for illustrating a dilution operation according to the embodiment step by step.
FIGS. 5A is conceptual views for illustrating process steps following the dilution operation shown in FIGS. 4A to 4D.
FIGS. 5B is conceptual views for illustrating process steps following the dilution operation shown in FIGS. 4A to 4D.
FIG. 6 is a flowchart showing the dilution operation according to the embodiment.

### DETAILED DESCRIPTION

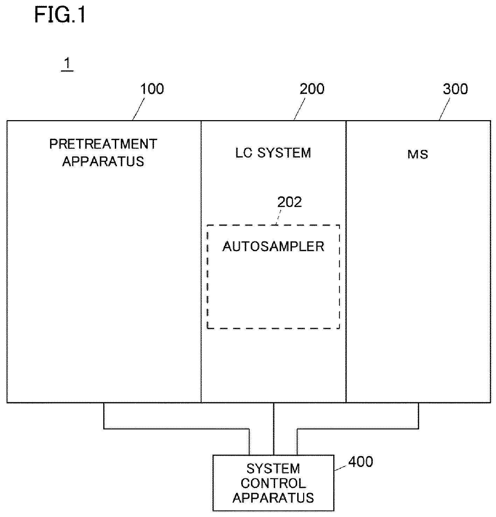

One embodiment of an analysis system including an apparatus implemented as the apparatus of the present disclosure will be described with reference to FIG. 1.

An analysis system 1 includes a pretreatment apparatus 100, a liquid chromatography system (hereinafter referred to as an "LC system") 200, a mass spectrometer (MS) 300, and a system control apparatus 400. The system control apparatus 400 controls operations of the pretreatment apparatus 100, the LC system 200, and the MS 300. The system control apparatus 400 can be implemented as a dedicated computer or a general-purpose PC with software for controlling and managing the pretreatment apparatus 100, the LC system 200, and the MS 300.

Details of the LC system 200 will be described below. The LC system 200 is configured to subject a sample pretreated by the pretreatment apparatus 10 to liquid chromatographic analysis, and includes an autosampler 202 for collecting the sample transferred from the pretreatment apparatus 100 and injecting the sample into an analysis channel for liquid chromatography. The autosampler 202 has the function of diluting the sample transferred from the pretreatment apparatus 100, and is implemented as the apparatus according to the present disclosure. If the pretreatment apparatus 100 has the function of diluting the sample, the apparatus according to the present disclosure may be the pretreatment apparatus 100.

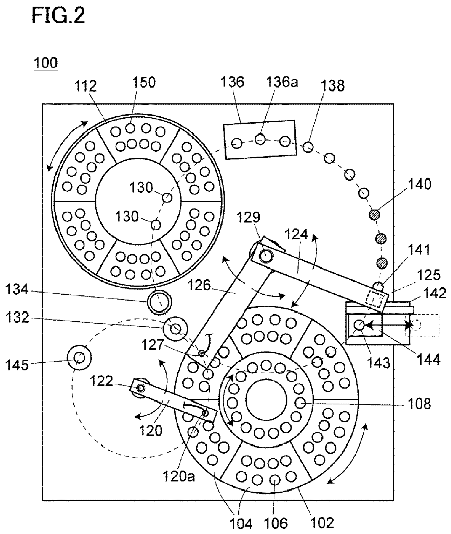

One example of the configuration of the pretreatment apparatus 100 will be described with reference to FIG. 2.

The pretreatment apparatus 100 implements required processes for pretreatment using one pretreatment container 150 for each of samples. The pretreatment apparatus 100 includes a plurality of treatment ports for implementing respective pretreatment processes. The pretreatment container containing the sample is arranged in any one of the treatment ports, and thus the sample contained in the pretreatment container is subjected to one of the pretreatment processes corresponding to the one of the treatment ports.

The pretreatment container 150 is conveyed with a conveying arm 124. The conveying arm 124 has a holding part 125 holding the pretreatment container 150 at its distal end, and rotates in a horizontal plane about a vertical shaft 129 holding the proximal end of the conveying arm 124 so that the holding part 125 draws an arc-shaped trajectory. The treatment ports and other ports that are destinations of the pretreatment container 150 conveyed are all provided along the arc-shaped trajectory drawn by the holding part 125.

A sample setting part 102 is provided to set sample containers 106 containing the sample. A sampling arm 120 is provided near the sample setting part 102 to collect the sample from the sample containers 106 set in the sample setting part 102. The sample setting part 102 is provided with sample racks 104, which each hold some of the sample containers 106 and are arranged to form an arc shape.

The sampling arm 120 has a proximal end through which a vertical shaft 122 passes. The sampling arm 120 rotates in a horizontal plane about the shaft 122, and moves up and down along the shaft 122 in a vertical direction. A sampling nozzle 120a is held near the distal end of the sampling arm 120 so that the tip end of the sampling nozzle 120a faces vertically downward. Using the sampling arm 120 allows the sampling nozzle 120a to move in a horizontal plane to draw an arc-shaped trajectory, and to move up and down in a vertical direction.

A dispensing port 132 is provided on the trajectory of the sampling nozzle 120a and on the trajectory of the holding part 125 of the conveying arm 124. The dispensing port 132 is a port through which the sampling nozzle 120a dispenses the sample into the pretreatment container 150.

Inside the sample setting part 102, a plurality of reagent containers 108 are arranged to form an arc shape. A reagent arm 126 is provided to collect a reagent from the reagent containers 108. The reagent arm 126 has a proximal end supported by the vertical shaft 129 shared with the conveying arm 124, rotates in the horizontal plane, and moves up and down. A probe 127 is provided at the distal end of the reagent arm 126. The probe 127 has a tip end facing vertically downward, moves in the horizontal plane to draw the same arc-shaped trajectory as that of the holding part 125 of the conveying arm 124, and moves up and down.

The reagent containers 108 are conveyed to draw a circular trajectory in the horizontal plane independently of the sample setting part 102, thereby arranging a desired reagent container 108 at a predetermined reagent collecting position. The reagent collecting position is a position along the trajectory of the probe 127 of the reagent arm 126. At this position, a reagent is collected with the probe 127. The probe 127 sucks a predetermined reagent, and then dispenses the sucked reagent into the pretreatment container 150 arranged in the dispensing port 132, thereby adding the reagent to the sample.

A pretreatment container setting part 112 is provided at a position different from the position of the sample setting part 102. The pretreatment container setting part 112 includes unused pretreatment containers 150 arranged to form an arc shape. The pretreatment container setting part 112 rotates in the horizontal plane to move the pretreatment containers 150 in a circumferential direction. As a result, an optional pretreatment container 150 is arranged at a position along the trajectory of the holding part 125 of the conveying arm 124. The conveying arm 124 can hold the unused pretreatment container 150 arranged at the position along the trajectory of the holding part 125.

Ports of a pretreatment part for containing the pretreatment containers 150 and implementing specific pretreatment processes include filtration ports 130, stirring ports 136a, and temperature control ports 138 and 140.

Each filtration port 130 is a port for applying negative pressure to the pretreatment container 150 arranged in the filtration port 130 to filtrate the sample. A stirring part 136 includes a mechanism to periodically operate the stirring ports 136a separately in the horizontal plane, and is configured to stir the sample solution in the pretreatment container 150 arranged in each stirring port 136a.

The pretreatment apparatus 100 includes a sample transfer unit 142 for transferring the pretreated sample to the LC system 200 adjacent to the pretreatment apparatus 100. The sample transfer unit 142 includes a moving part 144 moving in the horizontal plane in one direction (the direction indicated by the arrow shown in FIG. 2) with a driving mechanism including a rack-and-pinion mechanism. The moving part 144 has an upper surface having a transfer port 143 in which a pretreatment container 150 containing the extracted sample is arranged.

The pretreatment apparatus 100 has a disposal port 134 for disposing a used pretreatment container 150. The disposal port 134 is located near the dispensing port 132 and at a position along the trajectory of the holding part 125 of the conveying arm 124. The pretreatment apparatus 100 further has a cleaning port 145 for cleaning the sampling nozzle 120a. The cleaning port 145 is located at a position along the trajectory of the sampling nozzle 120a. Although not illustrated, the pretreatment apparatus 100 further has another cleaning port for cleaning the outer and inner surfaces of the probe 127. This cleaning port is located at a position along the trajectory of the probe 127.

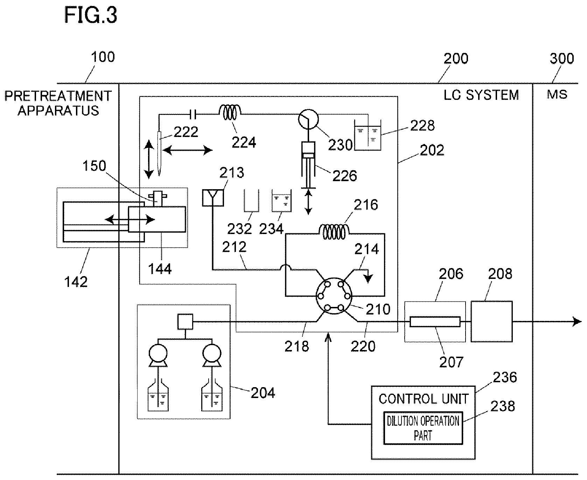

Subsequently, one embodiment of the LC system 200 will be described with reference to FIG. 3.

The LC system 200 includes a liquid feeding unit 204, a column oven 206, a detector 208, and a control unit 236 in addition to the autosampler 202. The liquid feeding unit 204 feeds, for example, two kinds of solvents to a mixer using a liquid feeding pump and feeds the resultant solution mixed with the mixer as a mobile phase. The autosampler 202 collects the sample from the pretreatment container 150 (sample part) transferred to the LC system 200 with the sample transfer unit 142 of the pretreatment apparatus 100 to inject the sample into the analysis channel for liquid chromatography. The column oven 206 includes an analysis column 207 separating the sample into components. The detector 208 detects the sample components into which the sample has been separated by the analysis column 207. Examples of the detector 208 include an ultraviolet absorbance detector. The control unit 236 is configured at least to control operation of the autosampler 202, and can be implemented as a computer provided inside the autosampler 202, a system controller comprehensively managing the entire analysis system 200, or any other suitable device.

The liquid feeding unit 204 is positioned at the upstream end of an upstream side analysis channel 218, and feeds the mobile phase through the upstream side analysis channel 218. The analysis column 207 and the detector 208 are provided on a downstream side analysis channel 220. The upstream side analysis channel 218 and the downstream side analysis channel 220 are each connected to an associated one of ports of a two-position valve 210 of the autosampler 202, and are connected together through the two-position valve 210.

The two-position valve 210 of the autosampler 202 includes six ports. A sample introduction channel 212, a drain channel 214, and the two ends of a sample loop 216 in addition to the upstream side analysis channel 218 and the downstream side analysis channel 220 are each connected to an associated one of the ports of the two-position valve 210. Switching the two-position valve 210 allows selection of either of a state where the sample introduction channel 212, the sample loop 216, and the drain channel 214 are connected together in series while the downstream side analysis channel 220 is connected immediately downstream of the upstream side analysis channel 218 (the state shown in FIG. 3) and a state where the upstream side analysis channel 218, the sample loop 216, and the downstream side analysis channel 220 are connected together in series. The sample introduction channel 212 communicates with an injection port 213.

The autosampler 202 includes a sampling needle 222 sucking and discharging liquid from the tip end and a syringe pump 226 connected to the sampling needle 222 through a channel. The sampling needle 222 can move in a horizontal direction and a vertical direction using a driving mechanism (not shown). The sampling needle 222 collects the sample from the pretreatment container 150 transferred to the LC system 200 with the sample transfer unit 142 of the pretreatment apparatus 100, and injects the sample into the analysis channel for liquid chromatography through the injection port 213.

Switching a channel switching valve 230 allows the syringe pump 226 to be connected also to a cleaning fluid container 228 storing a cleaning fluid. If the cleaning fluid is fed from the syringe pump 226 while the syringe pump 226 that has sucked the cleaning fluid is connected to the sampling needle 222 connected to the injection port 213, the inner surfaces of the sample loop 224, the sampling needle 222, and the sample introduction channel 212 can be cleaned.

The autosampler 202 includes a sample preparation container 232 for preparing the sample collected from the pretreatment container 150 with the sampling needle 222 and a diluent part 234 storing the diluent for diluting the sample. The sampling needle 222 has the function of dispensing the sample in the pretreatment container 150 transferred from the pretreatment apparatus 100 and the diluent in the diluent part 234 into the sample preparation container 232 to dilute the sample in the sample preparation container 232. The sample preparation container 232 may be implemented as a well provided in the principal plane of a plate.

The control unit 236 controlling operation of the autosampler 202 includes a dilution operation part 238 configured to make the autosampler 202 dilute the sample. The dilution operation part 238 has a function obtained when an arithmetic element executes a predetermined program.

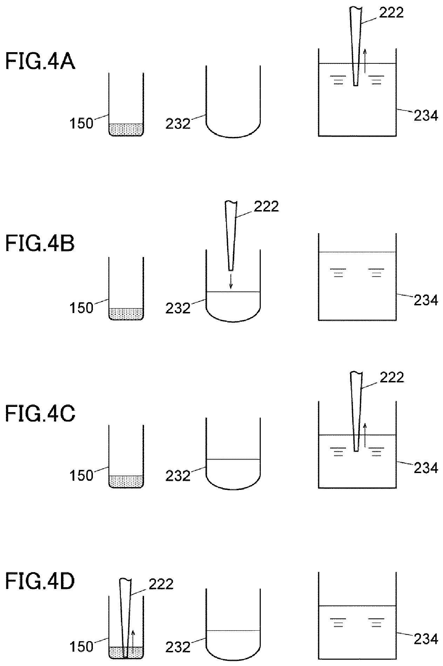

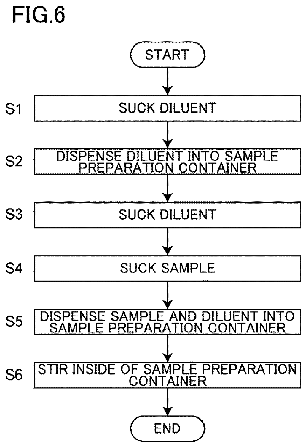

One example of the dilution operation achieved by the dilution operation part 238 will now be described with reference to the process charts shown in FIGS. 4A to. 5B as well as the flowchart shown in FIG. 6.

To dilute the sample, first, the diluent is sucked from the diluent part 234 with the sampling needle 222 (see Step S1 and FIG. 4A), and the sucked diluent is dispensed into the sample preparation container 232 (see Step S2 and FIG. 4B). Subsequently, the diluent is sucked again from the diluent part 234 with the sampling needle 222 (see Step S3 and FIG. 4C), and the sample is then sucked from the pretreatment container 150 with the sampling needle 222 (see Step S4 and FIG. 4D).

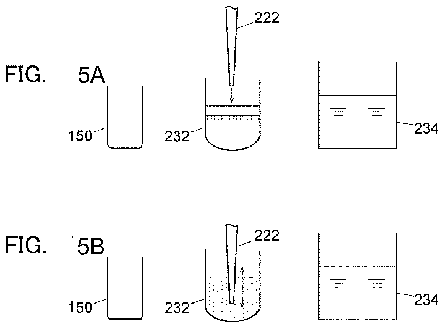

Thereafter, the sample and the diluent sucked with the sampling needle 222 are dispensed into the sample preparation container 232 (see Step S5 and FIG. 5A). As a result, phases of diluent are formed above and below a phase of the sample in the sample preparation container 232. The total amount of the diluent dispensed into the sample preparation container 232 is an amount required to dilute the sample at a predetermined dilution rate. In this state, a tip end portion of the sampling needle 222 is moved into liquid in the sample preparation container 232, and the sampling needle 222 sucks and discharges the liquid once or more times to stir the inside of the sample preparation container 232 and to mix the sample and the diluent together

The above dilution operation is merely an example, and the apparatus and the dilution method of the present disclosure should not be limited to this dilution operation. For example, in the dilution operation of the foregoing embodiment, the entire amount of the diluent sucked with the sampling needle 222 is dispensed into the sample preparation container 232, and thereafter the diluent and the sample are sucked with the sampling needle 222 in this order. However, the diluent sucked with the sampling needle 222 may be only partially dispensed into the sample preparation container 232, the sample alone may then be sucked with the sampling needle 222, and the sample and the diluent may be dispensed into the sample preparation container 232.

Returning to FIG. 3, after completion of the above dilution operation, the autosampler 200 sucks the diluted sample in the sample preparation container 232 with the sampling needle 222, and injects the sample into the analysis channel through the injection port 213. When the sample is injected through the injection port 213 into the analysis channel, the two-position valve 210 allows the sample introduction channel 212, the sample loop 216, and the drain channel 214 to be connected together in series. Thus, the sample injected from the injection port 213 is held in the sample loop 216. Thereafter, switching the two-position valve 210 allows the upstream side analysis channel 218, the sample loop 216, and the downstream side analysis channel 220 to be connected together in series. Thus, the sample held in the sample loop 216 is introduced into the analysis column 207 by the mobile phase from the liquid feeding unit 204. Components of the sample introduced into the analysis column 207 are separated from one another and detected with the detector 208. Then, the detected components are further introduced into the MS 300.

Signals fed from the detector 208 and the MS 300 are captured into the system control apparatus 400 (see FIG. 1). Operations, such as quantitative determination of the components into which the sample is separated in the analysis column 207 and composition analysis of the components, are performed by software incorporated into the system control apparatus 400 and hardware such as a central processing unit (CPU) executing the software.
- 1: Analysis System
- 100: Pretreatment Apparatus
- 200: LC System
- 202: Autosampler
- 222: Sampling Needle
- 232: Sample Preparation Container
- 234: Diluent Part
- 236: Control Unit
- 238: Dilution Operation Part

## Claims

1. A dispenser comprising:
a sample part including a sample;
a movable sampling needle configured to suck and discharge liquid through a tip end of the movable sampling needle;
a sample preparation container configured to prepare the sample collected from the sample part with the sampling needle;
a diluent part configured to store a diluent for diluting the sample; and
a control unit configured to control operation of the sampling needle, the control unit including a dilution operation part configured to add the diluent collected from the diluent part to the sample collected from the sample part with the sampling needle to dilute the sample in the sample preparation container, wherein
the dilution operation part dispenses the diluent into the sample preparation container with the sampling needle before dispensing of the sample, dispenses, with the sampling needle, the sample into the sample preparation container into which the diluent has been dispensed, and thereafter dispenses, into the sample preparation container, the diluent sucked with the sampling needle before suction of the sample.

2. The dispenser of claim 1, wherein the dilution operation part dispenses, into the sample preparation container, the diluent sucked with the sampling needle before the suction of the sample, and thereafter sucks, and discharges, liquid in the sample preparation container with the sampling needle once or more times, thereby stirring the sample and the diluent.

3. A method for diluting a sample by adding a diluent to the sample using a sampling needle in a sample preparation container, the method comprising:
dispensing the diluent into the sample preparation container with the sampling needle before dispensing of the sample;
dispensing, with the sampling needle, the sample into the sample preparation container into which the diluent has been dispensed; and
thereafter dispensing, into the sample preparation container, the diluent sucked with the sampling needle before suction of the sample.

4. The method of claim 3, wherein the diluent sucked with the sampling needle before the suction of the sample is dispensed into the sample preparation container, and thereafter liquid in the sample preparation container is sucked and discharged with the sampling needle once or more times, thereby stirring the sample and the diluent.
